# EUROPÄISCHE PATENTSCHRIFT

(11) **EP 3 173 390 B1**
(45) Veröffentlichungstag und Bekanntmachung des Hinweises auf die Patenterteilung: **24.03.2021**
(21) Anmeldenummer: 15196448.3
(22) Anmeldetag: 26.11.2015
(51) Int. Cl.: C03C 25/32, C03C 25/42, D06M 11/44, D06M 11/45, D06M 11/58, D06M 13/282, D06M 15/11, D06M 15/333, D06M 15/43

(54) **FLÄCHIGES TEXTILSUBSTRAT MIT EINER ZUMINDEST BEREICHSWEISEN FLAMMSCHUTZ-BESCHICHTUNG, VERFAHREN ZU DESSEN HERSTELLUNG UND VERWENDUNGEN HIERVON**
FLAT TEXTILE SUBSTRATE WITH AT LEAST PARTIAL FIRE PROTECTION COATING, METHOD FOR ITS PRODUCTION AND USES THEREOF
SUBSTRAT TEXTILE PLAT COMPRENANT UN REVETEMENT IGNIFUGE AU MOINS A CERTAINS ENDROITS, SON PROCEDE DE FABRICATION ET D'UTILISATION

(43) Veröffentlichungstag der Anmeldung: 31.05.2017
(73) Patentinhaber: VITRULAN Textile Glass GmbH, 95509 Marktschorgast (DE)
(72) Erfinder: Zettl, Dr. Heiko, 95448 Bayreuth (DE)
(74) Vertreter: Pfenning, Meinig & Partner mbB

(56) Entgegenhaltungen:
- DE-U1- 20 105 814
- GB-A- 1 395 792

## Beschreibung

Erfindungsgemäß werden ein flächiges Textilsubstrat, wie in den Ansprüche 1-12 beschrieben, mit einer zumindest bereichsweisen Flammschutz-Beschichtung und ein Verfahren, wie in dem Anspruch 13 beschrieben, zu dessen Herstellung bereitgestellt. Die Beschichtung des flächigen Textilsubstrats enthält erstens ein anorganisches Flammschutzmittel auf Magnesiumbasis, Aluminiumbasis und/oder Ammoniumbasis und zweitens ein Flammschutzmittel auf Phosphorbasis oder Phosphor-Stickstoffbasis. Ferner enthält die Beschichtung ein stärkebasiertes Bindemittel. Es wurde überraschend gefunden, dass das erfindungsgemäße, flächige Textilsubstrat in die Brandklasse A2 nach DIN EN 13501-1:2010-01 eingestuft werden kann. Basierend auf den ausgezeichneten Brandschutzeigenschaften wird unter anderem die Verwendung des flächigen Textilsubstrats als Tapete vorgeschlagen.

Im Stand der Technik sind keine flächigen Textilsubstrate bekannt, welche die Erfordernisse der Brandklasse A2 nach DIN EN 13501-1:2010-01 erfüllen.

Die DE 201 05 814 U1 offenbart eine wässrige Zusammensetzung, die zumindest ein hygroskopisches Salz, zumindest ein Borsäuresalz und zumindest ein organisches Bindemittel enthält.

Die GB 1 395 792 A offenbart ein Verfahren zur Behandlung eines faserhaltigen Materials, um dieses flammfest zu machen.

Ausgehend hiervon war es die Aufgabe der vorliegenden Erfindung ein flächiges Textilsubstrat, das die Kriterien der Brandklasse A2 nach DIN EN 13501-1:2010-01 erfüllt und ein Verfahren zu dessen Herstellung bereitzustellen.

Die Aufgabe wird gelöst durch das flächige Textilsubstrat gemäß Anspruch 1, das Verfahren zur Herstellung eines flächigen Textilsubstrats gemäß Anspruch 13 und die Verwendung gemäß Anspruch 14.

Erfindungsgemäß wird ein flächiges Textilsubstrat mit einer zumindest bereichsweisen Flammschutz-Beschichtung bereitgestellt, das herstellbar ist durch Beschichtung eines flächigen Textilsubstrats mit folgender wässriger Zusammensetzung:
a) 0,5 bis 10 Gew.-% eines stärkebasierten Bindemittels, das Stärke und/oder ein Stärkederivat enthält oder daraus besteht;
b) 10 bis 50 Gew.-% mindestens eines anorganischen Flammschutzmittels, das ausgewählt ist aus der Gruppe bestehend aus Aluminiumoxide, Magnesiumoxide, Aluminiumhydroxide, Magnesiumhydroxide, Ammonium-haltige Flammschutzmittel und Mischungen hiervon;
c) 0,5 bis 20 Gew.-% eines Flammschutzmittels auf Phosphorbasis oder auf Phosphor-Stickstoffbasis,
   wobei das Flammschutzmittel auf Phosphorbasis ausgewählt ist aus der Gruppe bestehend aus organischen Derivaten von Phosphonsäuresalzen und organischen Derivaten von Phosphorsäuresalzen, und
   wobei das Flammschutzmittel auf Phosphor-Stickstoffbasis
   a) ein organisches Derivat von einem Phosphonsäuresalz, ein organisches Derivat von einem Phosphorsäuresalz und/oder Mischungen hiervon; und
   b) ein Melamin, einen Harnstoff, Derivate hiervon und/oder Mischungen hiervon;
   enthält oder daraus besteht;
d) 1 bis 20 Gew.-% eines kunststoffbasierten Bindemittels, das mindestens einen Kunststoff enthält oder daraus besteht;
e) 0 bis 30 Gew.-% mindestens eines Additivs,
wobei sich die Komponenten a) bis e) sich mit Wasser zu 100 Gew.-% ergänzen und das flächige Substrat anschließend getrocknet wird.

Aufgrund der Trocknung wird das Wasser entfernt und die Gewichtsanteile der jeweiligen Komponenten in der Beschichtung sind entsprechend erhöht. Es wurde überraschend gefunden, dass ein erfindungsgemäßes flächiges Textilsubstrat ausgezeichnete Flammschutzeigenschaften aufweist. Insbesondere wird von einem erfindungsgemäßen flächigen Textilsubstrat die Brandklasse A2 nach DIN EN 13501-1:2010-01 erfüllt.

In einer bevorzugten Ausführungsform beträgt die Konzentration des stärkebasierten Bindemittels 1 bis 10 Gew.-%, bevorzugt 1,5 bis 10 Gew.-%, besonders bevorzugt 2 bis 5 Gew.-%. Das stärkebasierte Bindemittel kann acetylierte Stärke, kaltwasserlösliche Stärke, isopropylierte Stärke und/oder Kochstärke enthalten oder daraus bestehen.

Die Konzentration des kunststoffbasierten Bindemittels kann 1 bis 15 Gew.-%, bevorzugt 2 bis 10 Gew.-%, besonders bevorzugt 3 bis 5 Gew.-% betragen. Der mindestens eine Kunststoff kann ausgewählt sein aus der Gruppe bestehend aus Polystyrol-co-polyacrylaten, Polyvinylacetaten, Ethylen-Vinylacetaten, Polyacrylaten, Polyacrylamiden, Polymethacrylaten, Polyurethanen, Polyvinylpyrrolidonen, Mischungen hiervon und Copolymere hiervon. Bevorzugt ist er ausgewählt aus der Gruppe bestehend aus Ethylen-Vinylacetaten. Insbesondere liegt der mindestens eine Kunststoff als Dispersion vor.

In einer bevorzugten beträgt die Konzentration des anorganischen Flammschutzmittels 15 bis 45 Gew.-%, bevorzugt 20 bis 40 Gew.-%, besonders bevorzugt 25 bis 37 Gew.-%. Das anorganische Flammschutzmittel enthält bevorzugt Aluminumtrihydrat, Magnesiumdihydrat, Ammoniumsulfat und/oder Ammoniumphosphat oder besteht daraus.

Die Konzentration des Flammschutzmittels auf Phosphorbasis oder auf Phosphor-Stickstoffbasis kann 2 bis 15 Gew.-%, bevorzugt 3 bis 10 Gew.-%, besonders bevorzugt 4 bis 7 Gew.-% betragen. Das Flammschutzmittel auf Phosphorbasis kann ausgewählt sein aus der Gruppe bestehend aus Methylphosphonsäure, Trikresylphosphat oder Tris(2 ethylhexyl)phosphat.

Basiert das Flammschutzmittel auf Phosphor-Stickstoffbasis, so kann es
a) Methylphosphonsäure, Trikresylphosphat und/oder Tris(2 ethylhexyl)phosphat; und
b) ein Melamin, einen Harnstoff, Derivate hiervon und/oder Mischungen hiervon;
enthalten oder daraus bestehen.

Die Konzentration des mindestens einen Additivs kann 0,1 bis 15 Gew.-%, bevorzugt 0,5 bis 10, insbesondere von 3 bis 10 Gew.-%, betragen. Das Additiv kann ausgewählt sein aus der Gruppe bestehend aus
- Konservierungsmittel, insbesondere aus der Gruppe der Isothiazolinone, aus der Gruppe der Pyrithione , aus der Gruppe der Imidazole, aus der Gruppe der Carbamate, aus der Gruppe der konservierenden Lösungsmittel,
- Füllstoffe, insbesondere Calciumcarbonate, Kaoline, Glashohlkugeln, Glaskugeln, Polymerkugeln, Keramikkugeln oder Quarzmehle,
- Fasern, insbesondere Glasfaserkurzfasern, Cellulosefasern oder Polyesterfasern oder andere synthetische Textilfasern bzw. natürliche Textilfasern wie z.B. Baumwolle,
- Rheologiehilfsmittel, insbesondere Acrylatverdicker, Celluloseverdicker, Polyurethanverdicker, Verdicker auf Harnstoff oder Polyharnstoff Basis, polymere Zucker oder aus der Gruppe der natürlichen und synthetischen Schichtsilikate,
- Netzmittel, insbesondere Tenside aus der Gruppe der nichtionischen, anionischen oder kationischen Tenside,
- Entschäumer, insbesondere Entschäumer auf Mineralölbasis; aus der Gruppe der Phosphate und Polyphosphate oder aus der Gruppe der Siloxane,
- Schaumstabilisatoren, insbesondere Polysiloxane; und
- Mischungen hiervon.

Bevorzugt ist das Additiv ausgewählt aus der Gruppe bestehend aus Rheologiehilfsmittel, insbesondere ist das Additiv ein Acrylatverdicker.

Die Konzentration des mindestens einen Vernetzers kann 0,01 bis 3 Gew.-%, bevorzugt 0,02 bis 2 Gew.-%, besonders bevorzugt 0,05 bis 1 Gew.-%, insbesondere 0,1 bis 0,5 Gew.-%, betragen. Der Vernetzer ist bevorzugt ein Ammoniumzirkonylcarbonat (AZC).

Nach der Trocknung kann die Flammschutz-Beschichtung des flächigen Substrats
a) das stärkebasierte Bindemittel in einer Konzentration von 2 bis 30 Gew.-%, bevorzugt 3 bis 20 Gew.-%, besonders bevorzugt 4 bis 10 Gew.-%; und/oder
b) das anorganische Flammschutzmittel in einer Konzentration von 30 bis 90 Gew.-%, bevorzugt 40 bis 80 Gew.-%, besonders bevorzugt 50 bis 74 Gew.-%; und/oder
c) das auf Phosphorbasis oder auf Phosphor-Stickstoffbasis basierte Flammschutzmittel in einer Konzentration von 4 bis 30 Gew.-%, bevorzugt 6 bis 20 Gew.-%, besonders bevorzugt 8 bis 14 Gew.-%; und/oder
d) das kunststoffbasierte Bindemittel in einer Konzentration von 2 bis 30 Gew.-%, bevorzugt 4 bis 20 Gew.-%, besonders bevorzugt 6 bis 10 Gew.-%; und/oder
e) das mindestens eine Additiv in einer Konzentration von 0,2 bis 30 Gew.-%, bevorzugt 1 bis 20 Gew.-%, insbesondere von 6 bis 20 Gew.-%;
enthalten oder daraus bestehen.

Die zumindest bereichsweise Flammschutz-Beschichtung des flächigen Textilsubstrats kann eine Schichtdicke von 10 µm) bis 5 mm, insbesondere von 50 µm bis 2500 µm aufweisen.

Das flächige Textilsubstrat kann ausgewählt sein aus der Gruppe bestehend aus Gewebe, Vliese, Gestricke, Gewirke, Gelege oder Kombinationen hiervon.

Das flächige Textilsubstrat enthält bevorzugt Glasfasern oder besteht daraus.

Das Textilsubstrat kann eine Mischtextilie enthaltend Glasfasern und Fasern ausgewählt aus der Gruppe bestehend aus
- Mineralfasern,
- Carbonfasern,
- Synthetische Fasern, insbesondere Polymerfasern, bevorzugt aus Polyestern, Polyamiden und Polyurethanen,
- Viskosefasern, Zellstofffasern,
- Naturfasern, insbesondere Baumwolle, Wolle, Kapok, Hanf, Leinen, Jute,
- Metallfäden, sowie
- Mischungen hiervon;
enthalten oder daraus bestehen.

Zwischen Textilsubstrat und Beschichtung kann mindestens ein weiteres funktionales Element angeordnet sein, das ausgewählt ist aus der Gruppe bestehend aus Akustikvlies, Schaumstoff, Wärmedämmsystem, Wärmespeichersystem, wasserabsorbierendes System, Flächenheizung, Ausgleichsschicht, IR-reflektierende Schicht, geruchsabsorbierende Schicht, paramagnetisches System und Kombinationen hiervon.

Ferner wird ein Verfahren zur Herstellung eines erfindungsgemäßen flächigen Textilsubstrats bereitgestellt, bei dem eine Beschichtung mit der Zusammensetzung
a) 0,5 bis 10 Gew.-% eines stärkebasierten Bindemittels , das Stärke und/oder ein Stärkederivat enthält oder daraus besteht;
b) 10 bis 50 Gew.-% mindestens eines anorganischen Flammschutzmittels, das ausgewählt ist aus der Gruppe bestehend aus Aluminiumoxide, Magnesiumoxide, Aluminiumhydroxide, Magnesiumhydroxide, Ammonium-haltige Flammschutzmittel und Mischungen hiervon;
c) 0,5 bis 20 Gew.-% eines Flammschutzmittels auf Phosphorbasis oder auf Phosphor-Stickstoffbasis,
   wobei das Flammschutzmittel auf Phosphorbasis ausgewählt ist aus der Gruppe bestehend aus organischen Derivaten von Phosphonsäuresalzen und organischen Derivaten von Phosphorsäuresalzen, und
   wobei das Flammschutzmittel auf Phosphor-Stickstoffbasis c)
   ein organisches Derivat von einem Phosphonsäuresalz, ein organisches Derivat von einem Phosphorsäuresalz und/oder Mischungen hiervon; und
   d) ein Melamin, einen Harnstoff, Derivate hiervon und/oder Mischungen hiervon;
   enthält oder daraus besteht;
d) 1 bis 20 Gew.-% eines kunststoffbasierten Bindemittels, das mindestens einen Kunststoff enthält oder daraus besteht;
e) 0 bis 30 Gew.-% mindestens eines Additivs,
wobei sich die Komponenten a) bis e) und das Lösungsmittel Wasser auf 100 Gew.-% ergänzen,
auf mindestens einer Oberfläche eines Textilsubstrats mittels Walze, Rakel, Druckwerk, Siebdruck, Vorhanggießer, Sprühdüsen und/oder Schlitzdüse aufgetragen wird und anschließend getrocknet wird.

Die Beschichtung kann als Schaum oder als Film aufgetragen werden.

Es wird die Verwendung des erfindungsgemäßen Textilsubstrats als Tapete, für dekorative Wand- und Deckenbeläge, für armierende Wand- Dach-, Decken- und Bodenbeläge im Innen- und Außenbereich, für dekorative Wand- und Deckenverkleidungen und/oder für dekorative Tür- und Möbelverkleidungen, wobei diese einen Farbanstrich aufweisen oder frei von einem Farbanstrich sind, vorgeschlagen.

Anhand der nachfolgenden Beispiele soll der erfindungsgemäße Gegenstand näher erläutert werden, ohne diesen auf die hier dargestellten Ausführungsformen einschränken zu wollen.

### Beispiel 1: Herstellung eines erfindungsgemäßen flächigen Textilsubstrats

Es wurde folgende Rezeptur auf ein Glasfasergewebe aufgebracht:

| | |
|---|---|
| stärkebasiertes Bindemittel: | 28 Teile acetylierte Stärke |
| anorganisches Flammschutzmittel: | 320 Teile Aluminiumtrihydroxid |
| P- oder P-N-bas. Flammschutzm.: | 60 Teile P-N-basiertes Flammschutzmittel (50 %-ig in H₂O) |
| Kunststoffbasiertes Bindemittel: | 85 Teile EVA Dispersion (50 %-ig in H₂O) |
| Zirkonverbindung: | 8 Teile AZC (20%-ig in H₂O) |
| Additiv: | 5 Teile Acrylatverdicker (30 %-ig in H₂O) |
| Wasser: | 480 Teile Wasser |

Dies entspricht einer Menge von:

| | |
|---|---|
| Acetylierte Stärke: | 2,8 Gew.-% |
| Aluminiumtrihydroxid: | 32,5 Gew.-% |
| P-N-basiertes Flammschutzmittel: | 3,1 Gew.-% |
| EVA | 4,3 Gew.-% |
| AZC: | 0,16 Gew.-% |
| Acrylatverdicker: | 0,16 Gew.-% |
| Wasser: | 56,8 Gew.-% |

Von dieser Beschichtungsmasse wurde mittels Siebdruckschablonen ca. 250 g/m² (trocken) auf ein 220 g/m² schweres Glasgewebe aufgebracht und anschließend getrocknet.

Nach der Trocknung weist die Beschichtung ungefähr folgende Konzentrationen auf:

| | |
|---|---|
| Acetylierte Stärke: | 6,0 Gew.-% |
| Aluminiumtrihydroxid: | 75,5 Gew.-% |
| P-N-basiertes Flammschutzmittel: | 7,1 Gew.-% |
| EVA | 10,7 Gew.-% |
| AZC: | 0,4 Gew.-% |
| Acrylatverdicker: | 0,3 Gew.-% |

### Beispiel 2: Charakterisierung eines erfindungsgemäßen flächigen Textilsubstrats

An dem in Beispiel 1 hergestellten Gewebe wurde der PCS Wert für die Einstufung in Brandklasse A2 untersucht und es wurden in 2 Prüfungen Werte von 2,262 MJ/kg und 2,359 MJ/kg erreicht.

Mit diesen Werten ist eine Einstufung in die Brandklasse A2 nach DIN EN 13501-1:2010-01 gewährleistet.

## Patentansprüche

1. Flächiges Textilsubstrat mit einer zumindest bereichsweisen Flammschutz-Beschichtung, herstellbar durch Beschichtung eines flächigen Textilsubstrats mit folgender wässrigen Zusammensetzung:
a) 0,5 bis 10 Gew.-% eines stärkebasierten Bindemittels, das Stärke und/oder ein Stärkederivat enthält oder daraus besteht;
b) 10 bis 50 Gew.-% mindestens eines anorganischen Flammschutzmittels, das ausgewählt ist aus der Gruppe bestehend aus Aluminiumoxide, Magnesiumoxide, Aluminiumhydroxide, Magnesiumhydroxide, Ammonium-haltige Flammschutzmittel und Mischungen hiervon und Mischungen hiervon;
c) 0,5 bis 20 Gew.-% eines Flammschutzmittels auf Phosphorbasis oder auf Phosphor-Stickstoffbasis,
wobei das Flammschutzmittel auf Phosphorbasis ausgewählt ist aus der Gruppe bestehend aus organischen Derivaten von Phosphonsäuresalzen und organischen Derivaten von Phosphorsäuresalzen, und
wobei das Flammschutzmittel auf Phosphor-Stickstoffbasis
a) ein organisches Derivat von einem Phosphonsäuresalz, ein organisches Derivat von einem Phosphorsäuresalz und/oder Mischungen hiervon; und
b) ein Melamin, einen Harnstoff, Derivate hiervon und/oder Mischungen hiervon;
enthält oder daraus besteht;
d) 1 bis 20 Gew.-% eines kunststoffbasierten Bindemittels, das mindestens einen Kunststoff enthält oder daraus besteht;
e) 0 bis 30 Gew.-% mindestens eines Additivs,
wobei sich die Komponenten a) bis e) sich mit Wasser zu 100 Gew.-% ergänzen und anschließender Trocknung des flächigen Substrats.

2. Textilsubstrat nach Anspruch 1, **dadurch gekennzeichnet, dass** das stärkebasierte Bindemittel acetylierte Stärke, kaltwasserlösliche Stärke, isopropylierte Stärke und/oder Kochstärke enthält oder daraus besteht, wobei die Konzentration des stärkebasierten Bindemittels vorzugsweise 1 bis 10 Gew.-%, bevorzugt 1,5 bis 10 Gew.-%, besonders bevorzugt 2 bis 5 Gew.-% beträgt.

3. Textilsubstrat nach einem der vorhergehenden Ansprüche, **dadurch gekennzeichnet, dass** der mindestens eine Kunststoff des kunststoffbasierten Bindemittels ausgewählt ist aus der Gruppe bestehend aus Polystyrol-co-polyacrylaten, Polyvinylacetaten, Ethylen-Vinylacetaten, Polyacrylaten, Polyacrylamiden, Polymethacrylaten, Polyurethanen, Polyvinylpyrrolidonen, Polyvinylchloride, Styrol-Butadienen, Mischungen und Copolymeren hiervon, bevorzugt ausgewählt aus der Gruppe bestehend aus Ethylen-Vinylacetaten und der mindestens eine Kunststoff als Dispersion vorliegen kann, wobei die Konzentration des kunststoffbasierten Bindemittels vorzugsweise 1 bis 15 Gew.-%, bevorzugt 2 bis 10 Gew.-%, besonders bevorzugt 3 bis 5 Gew.-%, beträgt.

4. Textilsubstrat nach einem der vorhergehenden Ansprüche, **dadurch gekennzeichnet, dass** das anorganische Flammschutzmittel ausgewählt ist aus der Gruppe bestehend aus Aluminumtrihydrat, Magnesiumdihydrat, Ammoniumsulfat, Ammoniumphosphat und Mischungen hiervon, wobei die Konzentration des anorganischen Flammschutzmittels vorzugsweise 15 bis 45 Gew.-%, bevorzugt 20 bis 40 Gew.-%, besonders bevorzugt 25 bis 37 Gew.-%, beträgt.

5. Textilsubstrat nach einem der vorhergehenden Ansprüche, **dadurch gekennzeichnet, dass** das Flammschutzmittel auf Phosphorbasis ausgewählt ist aus der Gruppe bestehend aus Methylphosphonsäure, Trikresylphosphat oder Tris(2-ethylhexyl)phosphat, wobei die Konzentration des Flammschutzmittels auf Phosphorbasis oder auf Phosphor-Stickstoffbasis 2 bis 15 Gew.-%, bevorzugt 3 bis 10 Gew.-%, besonders bevorzugt 4 bis 7 Gew.-% beträgt.

6. Textilsubstrat nach einem der vorhergehenden Ansprüche, **dadurch gekennzeichnet, dass** das Flammschutzmittel auf Phosphor-Stickstoffbasis
a) Methylphosphonsäure, Trikresylphosphat und/oder Tris(2-ethylhexyl)phosphat; und
b) ein Melamin, einen Harnstoff, Derivate hiervon und/oder Mischungen hiervon;
enthält oder daraus besteht.

7. Textilsubstrat nach einem der vorhergehenden Ansprüche,
**dadurch gekennzeichnet, dass** das Additiv ausgewählt ist aus der Gruppe bestehend aus
• Konservierungsmittel, insbesondere aus der Gruppe der Isothiazolinone, aus der Gruppe der Pyrithione, aus der Gruppe der Imidazole, aus der Gruppe der Carbamate, aus der Gruppe der konservierenden Lösungsmittel,
• Füllstoffe, insbesondere Calciumcarbonate, Kaoline, Glashohlkugeln, Glaskugeln, Polymerkugeln, Keramikkugeln oder Quarzmehle,
• Fasern, insbesondere Glasfaserkurzfasern, Cellulosefasern oder Polyesterfasern oder andere synthetische Textilfasern bzw. natürliche Textilfasern wie z.B. Baumwolle,
• Rheologiehilfsmittel, insbesondere Acrylatverdicker, Celluloseverdicker, Polyurethanverdicker, Verdicker auf Harnstoff oder Polyharnstoff Basis, polymere Zucker oder aus der Gruppe der natürlichen und synthetischen Schichtsilikate,
• Netzmittel, insbesondere Tenside aus der Gruppe der nichtionischen, anionischen oder kationischen Tenside,
• Vernetzer, insbesondere Ammoniumzirkonylcarbonat,
• Entschäumer, insbesondere Entschäumer auf Mineralölbasis; aus der Gruppe der Phosphate und Polyphosphate oder aus der Gruppe der Siloxane,
• Schaumstabilisatoren, insbesondere Polysiloxane; und
• Mischungen hiervon
wobei das Additiv bevorzugt ein Rheologiehilfsmittel, insbesondere Acrylatverdicker, ist und wobei die Konzentration des mindestens einen Additivs vorzugsweise 0,1 bis 15 Gew.-%, bevorzugt 0,5 bis 10, insbesondere von 3 bis 10 Gew.-%, beträgt.

8. Textilsubstrat nach einem der vorhergehenden Ansprüche, **dadurch gekennzeichnet, dass** die Flammschutz-Beschichtung des flächigen Substrats nach der Trocknung
a) das stärkebasierte Bindemittel in einer Konzentration von 2 bis 30 Gew.-%, bevorzugt 3 bis 20 Gew.-%, besonders bevorzugt 4 bis 10 Gew.-%; und/oder
b) das anorganische Flammschutzmittel in einer Konzentration von 30 bis 90 Gew.-%, bevorzugt 40 bis 80 Gew.-%, besonders bevorzugt 50 bis 76 Gew.-%; und/oder
c) das auf Phosphorbasis oder auf Phosphor-Stickstoffbasis basierte Flammschutzmittel in einer Konzentration von 4 bis 30 Gew.-%, bevorzugt 5 bis 20 Gew.-%, besonders bevorzugt 7 bis 14 Gew.-%; und/oder
d) das kunststoffbasierte Bindemittel in einer Konzentration von 2 bis 30 Gew.-%, bevorzugt 4 bis 20 Gew.-%, besonders bevorzugt 6 bis 12 Gew.-%; und/oder
e) das mindestens eine Additiv in einer Konzentration von 0,2 bis 30 Gew.-%, bevorzugt 1 bis 20 Gew.-%, insbesondere von 1,5 bis 10 Gew.-%;
enthält oder daraus besteht.

9. Textilsubstrat nach einem der vorhergehenden Ansprüche, **dadurch gekennzeichnet, dass** die zumindest bereichsweise Flammschutz-Beschichtung eine Schichtdicke von 10 um bis 5 mm, insbesondere von 50 µm bis 2500 µm, aufweist.

10. Textilsubstrat nach einem der vorhergehenden Ansprüche, **dadurch gekennzeichnet, dass** das flächige Textilsubstrat ausgewählt ist aus der Gruppe bestehend aus Gewebe, Vliese, Gestricke, Gewirke, Gelege oder Kombinationen hiervon.

11. Textilsubstrat nach einem der vorhergehenden Ansprüche,
**dadurch gekennzeichnet, dass** das Textilsubstrat eine Mischtextilie enthaltend Glasfasern und Fasern ist, insbesondere eine Mischtextilie enthaltend Glasfasern und Fasern ausgewählt aus der Gruppe bestehend aus
• Mineralfasern,
• Carbonfasern,
• Synthetische Fasern, insbesondere Polymerfasern, bevorzugt aus Polyestern, Polyamiden und Polyurethanen,
• Viskosefasern, Zellstofffasern,
• Naturfasern, insbesondere Baumwolle, Wolle, Kapok, Hanf, Leinen, Jute,
• Metallfäden, sowie
• Mischungen hiervon;
enthält oder daraus besteht.

12. Textilsubstrat nach einem der vorhergehenden Ansprüche,
**dadurch gekennzeichnet, dass** zwischen Textilsubstrat und Beschichtung mindestens ein weiteres funktionales Element angeordnet ist, das ausgewählt ist aus der Gruppe bestehend aus Akustikvlies, Schaumstoff, Wärmedämmsystem, Wärmespeichersystem, wasserabsorbierendes System, Flächenheizung, Ausgleichsschicht, IR-reflektierende Schicht, geruchsabsorbierende Schicht, paramagnetisches System und Kombinationen hiervon.

13. Verfahren zur Herstellung eines flächigen Textilsubstrat mit einer zumindest bereichsweisen Flammschutz-Beschichtung nach einem der vorhergehenden Ansprüche, bei dem eine Beschichtung mit der Zusammensetzung
a) 0,5 bis 10 Gew.-% eines stärkebasierten Bindemittels, das Stärke und/oder ein Stärkederivat enthält oder daraus besteht;
b) 10 bis 50 Gew.-% mindestens eines anorganischen Flammschutzmittels, das ausgewählt ist aus der Gruppe bestehend aus Aluminiumoxide, Magnesiumoxide, Aluminiumhydroxide, Magnesiumhydroxide, Ammonium-haltige Flammschutzmittel und Mischungen hiervon;
c) 0,5 bis 20 Gew.-% eines Flammschutzmittels auf Phosphorbasis oder auf Phosphor-Stickstoffbasis,
wobei das Flammschutzmittel auf Phosphorbasis ausgewählt ist aus der Gruppe bestehend aus organischen Derivaten von Phosphonsäuresalzen und organischen Derivaten von Phosphorsäuresalzen, und
wobei das Flammschutzmittel auf Phosphor-Stickstoffbasis
a) ein organisches Derivat von einem Phosphonsäuresalz, ein organisches Derivat von einem Phosphorsäuresalz und/oder Mischungen hiervon; und
b) ein Melamin, einen Harnstoff, Derivate hiervon und/oder Mischungen hiervon;
enthält oder daraus besteht;
d) 1 bis 20 Gew.-% eines kunststoffbasierten Bindemittels, das mindestens einen Kunststoff enthält oder daraus besteht;
e) 0 bis 30 Gew.-% mindestens eines Additivs,
wobei sich die Komponenten a) bis e) und das Lösungsmittel Wasser auf 100 Gew.-% ergänzen,
auf mindestens einer Oberfläche eines Textilsubstrats mittels Walze, Rakel, Druckwerk, Siebdruck, Vorhanggießer, Sprühdüsen und/oder Schlitzdüse, insbesondere als Schaum oder als Film, aufgetragen wird und anschließend getrocknet wird.

14. Verwendung des Textilsubstrats nach einem der Ansprüche 1 bis 12 als Tapete, für dekorative Wand- und Deckenbeläge, für armierende Wand-, Dach-, Decken- und Bodenbeläge im Innen- und Außenbereich, für dekorative Wand- und Deckenverkleidungen und/oder für dekorative Tür- und Möbelverkleidungen, wobei diese einen Farbanstrich aufweisen oder frei von einem Farbanstrich sind.

## Claims

1. A two-dimensional textile substrate comprising an at least regional flame retardant coating, producible by coating a two-dimensional textile substrate with the following aqueous composition:
a) 0.5 to 10 wt.-% of a starch-based binding agent comprising or consisting of starch and/or a starch derivative;
b) 10 to 50 wt.-% of at least one inorganic flame retardant, which is selected from the group consisting of aluminum oxides, magnesium oxides, aluminum hydroxides, magnesium hydroxides, ammonium-containing flame retardants and mixtures thereof and mixtures thereof;
c) 0.5 to 20 wt.-% of a phosphorus-based or phosphorus-nitrogen-based flame retardant,
the phosphorus-based flame retardant being selected from the group consisting of organic derivatives of salts of phosphonic acid and organic derivatives of salts of phosphoric acid; and the phosphorus-nitrogen-based flame retardant comprising or consisting of
a) an organic derivative of a salt of phosphonic acid, an organic derivative of a salt of phosphoric acid and/or mixtures thereof; and
b) a melamine, a urea, derivatives thereof and/or mixtures thereof;
d) 1 to 20 wt.-% of a plastic-based binding agent comprising or consisting of at least one plastic;
e) 0 to 30 wt.-% of at least one additive,
the components a) to e), together with water, adding up to 100 wt.-%, and subsequent drying of the two-dimensional substrate.

2. The textile substrate according to claim 1, **characterized in that** the starch-based binding agent comprises or consists of acetylated starch, cold water-soluble starch, isopropylated starch and/or cooking starch, the concentration of the starch-based binding agent being in particular 1 to 10 wt.-%, preferably 1.5 to 10 wt.-%, particularly preferably 2 to 5 wt.-%.

3. A textile substrate according to any one of the preceding claims, **characterized in that** the at least one plastic of the plastic-based binding agent is selected from the group consisting of polystyrene-co-polyacrylates, polyvinyl acetates, ethylene vinyl acetates, polyacrylates, polyacrylamides, polymethacrylates, polyurethanes, polyvinylpyrrolidones, polyvinyl chloride, styrene butadienes, mixtures and copolymers thereof, preferably selected from the group consisting of ethylene vinyl acetates, and that the at least one plastic can be present in the form of a dispersion, the concentration of the plastic-based binding agent being in particular 1 to 15 wt.-%, preferably 2 to 10 wt.-%, particularly preferably 3 to 5 wt.-%.

4. A textile substrate according to any one of the preceding claims, **characterized in that** the inorganic flame retardant is selected from the group consisting of aluminum trihydrate, magnesium dihydrate, ammonium sulfate, ammonium phosphate and mixtures thereof, the concentration of the inorganic flame retardant being in particular 15 to 45 wt.-%, preferably 20 to 40 wt.-%, particularly preferably 25 to 37 wt.-%.

5. A textile substrate according to any one of the preceding claims, **characterized in that** the phosphorus-based flame retardant is selected from the group consisting of methylphosphonic acid, tricresyl phosphate or tris(2-ethylhexyl)phosphate, the concentration of the phosphorus-based or phosphorus-nitrogen-based flame retardant being 2 to 15 wt.-%, preferably 3 to 10 wt.-%, particularly preferably 4 to 7 wt.-%.

6. A textile substrate according to any one of the preceding claims, **characterized in that** the phosphorus-nitrogen-based the flame retardant comprises or consists of
a) methylphosphonic acid, tricresyl phosphate and/or tris(2-ethylhexyl)phosphate; and
b) a melamine, a urea, derivatives thereof and/or mixtures thereof.

7. A textile substrate according to any one of the preceding claims, **characterized in that** the additive is selected from the group consisting of
• preservatives, in particular from the group of isothiazolinones, from the group of pyrithiones, from the group of imidazoles, from the group of carbamates, from the group of preserving solvents;
• fillers, in particular calcium carbonates, kaolins, hollow glass spheres, glass spheres, polymer spheres, ceramic spheres or quartz powders;
• fibers, in particular milled glass fibers, cellulose fibers or polyester fibers, or other synthetic textile fibers or natural textile fibers, such as cotton;
• rheological additives, in particular acrylate thickeners, cellulose thickeners, polyurethane thickeners, urea-based or polyurea-based thickeners, polymeric sugars, or from the group of natural and synthetic phyllosilicates;
• wettings agents, in particular surfactants from the group of non-ionic, anionic or cationic surfactants;
• cross-linking agents, in particular ammonium zirconyl carbonate;
• defoaming agents, in particular mineral oil-based defoaming agents; from the group of phosphates and polyphosphates or from the group of siloxanes;
• foam stabilizers, in particular polysiloxanes; and
• mixtures thereof,
the additive preferably being a rheological additive, in particular an acrylate thickener, and the concentration of the at least one additive in particular being 0.1 to 15 wt.-%, preferably 0.5 to 10, and especially 3 to 10 wt.-%.

8. A textile substrate according to any one of the preceding claims, **characterized in that** the flame retardant coating of the two-dimensional substrate, after drying, comprises or consists of
a) the starch-based binder in a concentration of 2 to 30 wt.-%, preferably 3 to 20 wt.-%, and particularly preferably 4 to 10 wt.-%; and/or
b) the inorganic flame retardant in a concentration of 30 to 90 wt.-%, preferably 40 to 80 wt.-%, and particularly preferably 50 to 76 wt.-%; and/or
c) the phosphorus-based or phosphorus-nitrogen-based flame retardant in a concentration of 4 to 30 wt.-%, preferably 5 to 20 wt.-%, and particularly preferably 7 to 14 wt.-%; and/or
d) the plastic-based binder in a concentration of 2 to 30 wt.-%, preferably 4 to 20 wt.-%, and particularly preferably 6 to 12 wt.-%; and/or
e) the at least one additive in a concentration of 0.2 to 30 wt.-%, preferably 1 to 20 wt.-%, and in particular 1.5 to 10 wt.-%.

9. A textile substrate according to any one of the preceding claims, **characterized in that** the at least regional flame retardant coating has a layer thickness of 10 µm to 5 mm, and in particular 50 µm to 2500 µm.

10. A textile substrate according to any one of the preceding claims, **characterized in that** the two-dimensional textile substrate is selected from the group consisting of woven fabrics, non-woven fabrics, knitted fabrics, warp knitted fabrics, scrims or combinations thereof.

11. A textile substrate according to any one of the preceding claims, **characterized in that** the textile substrate is a mixed textile comprising glass fibers and fibers, and in particular a mixed textile comprising glass fibers and fibers selected from the group consisting of
• mineral fibers;
• carbon fibers;
• synthetic fibers, in particular polymer fibers, preferably made of polyesters, polyamides and polyurethanes;
• viscose fibers, pulp fibers;
• natural fibers, in particular cotton, wool, kapok, hemp, linen, jute;
• metal filaments, and
• mixtures thereof.

12. A textile substrate according to any one of the preceding claims, **characterized in that** at least one further functional element is arranged between the textile substrate and the coating, which is selected from the group consisting of acoustic fleece, foam material, thermal insulation system, heat storage system, water-absorbing system, panel heating, equalizing layer, IR-reflective layer, odor-absorbing layer, paramagnetic system, and combinations thereof.

13. A method for producing a two-dimensional textile substrate comprising an at least regional flame retardant coating according to any one of the preceding claims, in which a coating having the composition
a) 0.5 to 10 wt.-% of a starch-based binding agent comprising or consisting of starch and/or a starch derivative;
b) 10 to 50 wt.-% of at least one inorganic flame retardant, which is selected from the group consisting of aluminum oxides, magnesium oxides, aluminum hydroxides, magnesium hydroxides, ammonium-containing flame retardants and mixtures thereof;
c) 0.5 to 20 wt.-% of a phosphorus-based or phosphorus-nitrogen-based flame retardant,
the phosphorus-based flame retardant being selected from the group consisting of organic derivatives of salts of phosphonic acid and organic derivatives of salts of phosphoric acid; and the phosphorus-nitrogen-based flame retardant comprising or consisting of
a) an organic derivative of a salt of phosphonic acid, an organic derivative of a salt of phosphoric acid and/or mixtures thereof; and
b) a melamine, a urea, derivatives thereof and/or mixtures thereof;
d) 1 to 20 wt.-% of a plastic-based binding agent comprising or consisting of at least one plastic;
e) 0 to 30 wt.-% of at least one additive,
the components a) to e) and water, as the solvent, adding up to 100 wt.-%,
is applied to at least one surface of a textile substrate by way of a roller, a doctor blade, a printing unit, screen printing, curtain coater, spray nozzles and/or a slot die, in particular in the form of a foam or a film, and thereafter is dried.

14. Use of the textile substrate according to any one of claims 1 to 12 as a wallpaper, for decorative wall and ceiling coverings, for reinforcing wall, roof, ceiling and floor coverings indoors and outdoors, for decorative wall and ceiling linings and/or for decorative door and furniture covers, these comprising a coat of paint or being free of a coat of paint.

## Revendications

1. Substrat textile plat avec un revêtement ignifuge au moins par endroits, pouvant être réalisé par le revêtement d'un substrat textile plat avec la composition aqueuse suivante :
a) de 0,5 à 10 % en poids de liant à base d'amidon, qui contient ou est constitué d'amidon et/ou d'un dérivé d'amidon ;
b) de 10 à 50 % en poids d'au moins un produit ignifugeant inorganique, qui est choisi dans le groupe constitué des oxydes d'aluminium, des oxydes de magnésium, des hydroxydes d'aluminium, des hydroxydes de magnésium, de produits ignifugeants contenant de l'ammonium et de mélanges de ceux-ci, et de mélanges de ceux-ci ;
c) de 0,5 à 20 % en poids d'un produit ignifugeant à base de phosphore ou à base de phosphore et d'azote,
dans lequel le produit ignifugeant à base de phosphore est choisi dans le groupe constitué de dérivés organiques de sels d'acide phosphonique et de dérivés organiques de sels d'acide phosphorique, et
dans lequel le produit ignifugeant à base de phosphore et d'azote contient
a) un dérivé organique d'un sel d'acide phosphorique, un dérivé organique d'un sel d'acide phosphorique, et/ou des mélanges de ceux-ci ; et
b) une mélamine, une urée, des dérivés de celles-ci et/ou des mélanges de celles-ci ;
ou en est constitué ;
d) de 1 à 20 % en poids d'un liant à base d'une matière plastique, qui contient au moins une matière plastique ou en est constitué ;
e) de 0 à 30 % en poids d'au moins un additif,
dans lequel les composants a) à e) se complètent à 100 % en poids avec de l'eau, et un séchage ultérieur du substrat plat.

2. Substrat textile selon la revendication 1, **caractérisé en ce que** le liant à base d'amidon contient des amidons acétylés, des amidons solubles dans l'eau à froid, des amidons isopropylés et/ou de l'amidon de cuisine ou en est constitué, dans lequel la concentration du liant à base d'amidon s'élève de manière préférée de 1 de 10 % en poids, de préférence de 1,5 à 10 % en poids, de manière particulièrement préférée de 2 à 5 % en poids.

3. Substrat textile selon l'une des revendications précédentes, **caractérisé en ce que** l'au moins une matière plastique du liant à base de matière plastique est choisi dans le groupe constitué de copolymères polystyrène-co-polyacrylates, de polyvinylacétates, d'acétates d'éthylène vinyles, de polyacrylates, de polyacrylamides, de polyméthacrylates, de polyuréthanes, de polyvinylpyrrolidones, de chlorures de polyvinyle, de styrène-butadiènes, de mélanges et de copolymères de ceux-ci, choisis de préférence dans le groupe constitué des acétates d'éthylène vinyle et l'au moins une matière plastique peut être présente sous forme d'une dispersion, où la concentration du liant à base de matière plastique s'élève de manière préférée de 1 à 15 % en poids, de préférence de 2 à 10 % en poids, de manière particulièrement préférée de 3 à 5 % en poids.

4. Substrat textile selon l'une des revendications précédentes, **caractérisé en ce que** le produit ignifugeant inorganique est choisi dans le groupe constitué du trihydrate d'aluminium, du dihydrate de magnésium, du sulfate d'ammonium, du phosphate d'ammonium et de mélanges de ceux-ci, où la concentration du produit ignifugeant inorganique s'élève de manière préférée de 15 à 45 % en poids, de préférence de 20 à 40 % en poids, de manière particulièrement préférée de 25 à 37 % en poids.

5. Substrat textile selon l'une des revendications précédentes, **caractérisé en ce que** le produit ignifugeant à base de phosphore est choisi dans le groupe constitué de l'acide méthyl phosphonique, de tricrésylphosphate ou de tris(2-éthylhexyl)phosphate, où la concentration du produit ignifugeant à base de phosphore ou à base de phosphore et d'azote s'élève de 2 à 15 % en poids, de préférence de 3 à 10 % en poids, de manière particulièrement préférée de 4 à 7 % en poids.

6. Substrat textile selon l'une des revendications précédentes, **caractérisé en ce que** le produit ignifugeant à base de phosphore et d'azote contient
a) de l'acide méthyl phosphonique, du tricrésylphosphate et/ou tris(2- éthylhexyl)phosphate ; et
b) une mélamine, une urée, des dérivés de celles-ci et/ou des mélanges de celles-ci ;
ou en est constitué.

7. Substrat textile selon l'une des revendications précédentes, **caractérisé en ce que** l'additif est choisi dans le groupe constitué de
• produits de conservation, notamment, du groupe de l'isothiazolinone, du groupe de la pyrithione, du groupe des imidazoles, du groupe des carbamates, du groupe des solvants de conservation,
• de charges, notamment, de carbonate de calcium, de kaolins, de billes de verre creuses, de billes de verre, de billes de polymères, de billes de céramique ou de poudres de quartz,
• de fibres, notamment, de fibres de verre courtes, de fibres de cellulose ou de fibres de polyester ou d'autres fibres textiles synthétiques, respectivement, de fibres textiles naturelles, comme, par exemple, le coton,
• de produits auxiliaires de rhéologie, notamment d'épaississants acrylates, d'épaississants cellulosiques, d'épaississants de polyuréthane, d'épaississants à base d'urée ou de polyurée, de polymères du sucre ou du groupe des phyllosilicates naturels et synthétiques,
• d'agents mouillants, notamment de tensioactifs du groupe des tensioactifs non ioniques, anioniques ou cationiques,
• de mouillants, notamment de carbonate d'ammonium zirconyle,
• de démoussants, notamment de démoussants à base d'huile minérale ; du groupe des phosphates et des polyphosphates, ou du groupe des siloxanes,
• de stabilisants de la mousse, notamment de polysiloxanes ; et
• de mélanges de ceux-ci
où l'additif est de préférence un produit auxiliaire de rhéologie, notamment un épaississant acrylate, et où la concentration de l'au moins un additif s'élève de manière préférée de 0,1 à 15 % en poids, de préférence de 0,5 à 10, notamment de 3 à 10 % en poids.

8. Substrat textile selon l'une des revendications précédentes, **caractérisé en ce que** le revêtement ignifuge du substrat plat, après le séchage, contient
a) le liant à base d'amidon dans une concentration de 2 à 30 % en poids, de préférence de 3 à 20 % en poids, de manière particulièrement préférée de 4 à 10 % en poids ; et/ou
b) le produit ignifugeant inorganique dans une concentration de 30 à 90 % en poids, de préférence de 40 à 80 % en poids, de manière particulièrement préférée de 50 à 76 % en poids ; et/ou
c) le produit ignifugeant à base de phosphore ou à base de phosphore et d'azote dans une concentration de 4 à 30 % en poids, de préférence de 5 à 20 % en poids, de manière particulièrement préférée de 7 à 14 % en poids ; et/ou
d) le liant à base de matière plastique dans une concentration de 2 à 30 % en poids, de préférence de 4 à 20 % en poids, de manière particulièrement préférée de 6 à 12 % en poids ; et/ou
e) l'au moins un additif dans une concentration de 0,2 à 30 % en poids, de préférence de 1 à 20 % en poids, notamment de 1,5 à 10 % en poids ;
ou en est constitué.

9. Substrat textile selon l'une des revendications précédentes, **caractérisé en ce que** le revêtement ignifuge présente au moins par endroits une épaisseur de couche de 10 µm à 5 mm, notamment de 50 µm à 2500 µm.

10. Substrat textile selon l'une des revendications précédentes, **caractérisé en ce que** le substrat textile plat est choisi dans le groupe constitué des tissus, des non tissés, des tricots, des tissus tricotés, des treillis, ou de combinaisons de ceux-ci.

11. Substrat textile selon l'une des revendications précédentes, **caractérisé en ce que** le substrat textile est un textile mélangé contenant des fibres de verre et des fibres, notamment un mélange textile contenant des fibres de verre et des fibres choisies dans le groupe constitué
• des fibres minérales,
• des fibres de carbone,
• des fibres synthétiques, notamment des fibres de polymères, de préférence à base de polyesters, de polyamides et de polyuréthanes,
• de fibres de viscose, de fibres de cellulose,
• de fibres naturelles, notamment de coton, de laine, de capok, de chanvre, de lin, de jute,
• de fils métalliques, ainsi que
• des mélanges de celles-ci ;
ou en est constitué.

12. Substrat textile selon l'une des revendications précédentes, **caractérisé en ce qu'**au moins un autre élément fonctionnel, qui est choisi dans le groupe constitué d'un non tissé acoustique, d'une mousse, d'un système d'isolation thermique, d'un système d'accumulation de la chaleur, d'un système absorbant l'eau, d'un chauffage de surfaces, d'une couche de nivellement, d'une couche réfléchissant les IR, d'une couche absorbant les odeurs, d'un système paramagnétique ou des combinaisons de ceux-ci, est disposé entre le substrat textile et le revêtement.

13. Procédé de fabrication d'un substrat textile plat avec un revêtement ignifuge au moins par endroits selon l'une des revendications précédentes, chez lequel un revêtement avec la composition
a) de 0,5 à 10 % en poids de liant à base d'amidon, qui contient ou est constitué d'amidon et/ou d'un dérivé d'amidon ;
b) de 10 à 50 % en poids d'au moins d'un produit ignifugeant inorganique, qui est choisi dans le groupe constitué des oxydes d'aluminium, des oxydes de magnésium, de l'hydroxyde d'aluminium, de l'hydroxyde de magnésium, de produit ignifugeant contenant de l'ammonium, et des mélanges de ceux-ci ;
c) de 0,5 à 20 % en poids d'un produit ignifugeant à base de phosphore ou à base de phosphore et d'azote,
où le produit ignifugeant à base de phosphore est choisi dans le groupe constitué de dérivés organiques de sels d'acide phosphonique et de dérivés organiques de sels d'acide phosphorique, et
dans lequel le produit ignifugeant à base de phosphore et d'azote contient
a) un dérivé organique d'un sel d'acide phosphorique, un dérivé organique d'un sel d'acide phosphorique, et/ou des mélanges de ceux-ci ; et
b) une mélamine, une urée, des dérivés de celles-ci et/ou des mélanges de celles-ci ;
ou en est constitué ;
d) de 1 à 20 % en poids d'un liant à base d'une matière plastique, qui contient au moins une matière plastique ou en est constitué ;
e) de 0 à 30 % en poids d'au moins un additif,
où les composants a) à e) et le solvant eau se complètent à 100 % en poids,
est appliqué sur au moins une surface d'un substrat de textile au moyen d'un rouleau, d'un racloir, d'une unité d'impression, d'une sérigraphie, d'un dispositif d'enduction au rideau, de buses de pulvérisation et/ou d'une buse à fente, notamment sous forme de mousse ou de film, et est ensuite séché.

14. Utilisation du substrat textile selon l'une des revendications 1 à 12 en tant que papier peint, pour des revêtements de murs et de plafond décoratifs, pour des revêtements armés de murs, de toit, de plafonds et de sols à l'intérieur et à l'extérieur, pour des parements de murs et de plafonds décoratifs, et/ou des parements de portes et de meubles décoratifs, où ceux-ci présentent une couche de peinture ou sont exempts de couche de peinture.
